(19) Europäisches Patentamt
European Patent Office
Office européen des brevets

(11) **EP 1 980 303 B1**

(12) **EUROPÄISCHE PATENTSCHRIFT**

(45) Veröffentlichungstag und Bekanntmachung des Hinweises auf die Patenterteilung:
**24.01.2018  Patentblatt 2018/04**

(51) Int Cl.:
**B01D 3/14** *(2006.01)*          **B01D 3/42** *(2006.01)*

(21) Anmeldenummer: **08153197.2**

(22) Anmeldetag: **25.03.2008**

(54) **Kolonne mit Rückflussteiler mit parallel angeordneten Stoffaustausch-Partien und Verfahren zum Betreiben der Kolonne**

Column with a reflux divider having portions for the transfer of material arranged in parallel and a method of operating the column

Colonne avec tête de reflux dotée de parties de transfert de matière organisées de manière parallèle et méthode d'exploitation de la colonne

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **10.04.2007  EP 07105858**

(43) Veröffentlichungstag der Anmeldung:
**15.10.2008  Patentblatt 2008/42**

(73) Patentinhaber: **Sulzer Chemtech AG**
**8404 Winterthur (CH)**

(72) Erfinder:
• **Zuber, Laurent**
**8404 Winterthur (CH)**
• **Bachmann, Christian Gottlieb**
**8548 Ellikon an der Thur (CH)**
• **Ausner, Ilja**
**10965 Berlin (DE)**

(74) Vertreter: **Henkel, Breuer & Partner**
**Patentanwälte**
**Brienner Strasse 1**
**80333 München (DE)**

(56) Entgegenhaltungen:
**WO-A-2004/071618     US-A1- 2004 182 751**

**Beschreibung**

Die Erfindung betrifft eine Kolonne sowie einen Rückflussteiler für eine Kolonne mit parallel angeordneten Stoffaustausch-Partien gemäss Oberbegriff von Anspruch 1. Die Erfindung bezieht sich auf ein Verfahren zum Betreiben der Kolonne mit dem Rückflussteiler.

Zur Trennung eines flüssigen Multikomponentengemisches mittels Trennkolonnen werden gelegentlich Trennwand-Kolonnen verwendet. Bei einer solchen Kolonne sind in einem mittleren Bereich Stoffaustausch-Partien parallel angeordnet, die durch eine vertikale Trennwand gegeneinander abgegrenzt sind. Ein Rückfluss wird über dem Trennwandbereich nach einer Behandlung in mindestens einer Stoffaustauschstufe gesammelt und in zwei Teilströme mit konstantem Mengenverhältnis geteilt in den Stoffaustausch-Partien weiter behandelt. In die eine dieser Partien wird das Multikomponentengemisch zusätzlich zum einen der beiden Teilströme an einer tiefer liegenden Stelle eingespeist; aus der anderen Partie wird eine Komponente des Gemisches entnommen. Zur Bildung der beiden Teilströme wird in einem bekannten Rückflussteiler ein motorisch angetriebenes Wechselventil betätigt, das intermittierend während eines ersten Zeitabschnitts den ersten Teilstrom und während eines zweiten Zeitabschnitts den zweiten Teilstrom in die entsprechenden Partien einströmen lässt. Die beiden Zeitabschnitte bilden eine Periode des intermittierenden Vorgangs, die zwischen rund 3 und 30 Sekunden dauert. Das Wechselventil und dessen Antrieb werden relativ intensiv beansprucht, so dass öfters ein Austausch des Ventils und/oder Antriebs erforderlich wird.

In der WO 2004/071618 A1 wird eine Steuervorrichtung zum Betreiben einer Trennwandvorrichtung offenbart, welche mindestens vier Ventile aufweist, um die Strömungsgeschwindigkeiten der einzelnen Flüssigkeitsströme zu steuern.

Aus der US 2004/0182751 A1 ist eine Vorrichtung zum Wiedergewinnen von Ethylen aus einem Kohlenwasserstoffstrom bekannt, wobei die Vorrichtung eine einzige Destillationskolonnendruckhülle ist, deren oberer Bereich einen Ethylenverteiler enthält und deren unterer Teil einen C2-Verteiler und einen Ethylenstrippabschnitt umfasst.

Aufgabe der Erfindung ist es, eine Kolonne mit einem Rückflussteiler zu schaffen, der weniger anfällig als der bekannte ist. Diese Aufgabe wird durch die im Anspruch 1 definierte Kolonne mit dem Rückflussteiler gelöst.

Die vorliegende Erfindung betrifft eine Kolonne mit parallel angeordneten Stoffaustausch-Partien, die durch eine vertikale Trennwand gegeneinander abgegrenzt sind, welche einen Rückflussteiler enthält, der Organe zum gesteuerten Teilen einer zu behandelnden Flüssigkeit aufweist, die mit einem Flüssigkeitssammler verbunden sind, dieser Flüssigkeitssammler über der Trennwand innerhalb der Kolonne angeordnet ist, während die Organe ausserhalb der Kolonne angeordnet sind, und erste und zweite Verbindungsleitungen für einen ersten und einen zweiten Teilstrom umfassen, wobei die zwei Teilströme durch die erste und zweite Verbindungsleitungen in die Stoffaustausch-Partien eingespeist werden, dadurch gekennzeichnet, dass der Flüssigkeitssammler einen Behälter umfasst, insbesondere einen Ringkanal, in dem die Menge der gesammelten Flüssigkeit zwischen einem minimalen und einem maximalen Pegel variieren kann, dass unterhalb dem minimalen Pegel die erste Verbindungsleitung für den ersten Teilstrom am Behälter angeschlossen ist, dass die zweite Verbindungsleitung für den zweiten Teilstrom an den Behälter angeschlossen ist, dass stromaufwärts vor der zweiten Verbindungsleitung im Behälter ein durch eine Wand abgegrenzter Behälterteilraum angeordnet ist, dass in der Wand dieses Behälterteilraums mindestens ein Durchbruch für einen gedrosselten Flüssigkeitsdurchtritt zur Bildung des zweiten Teilstroms vorgesehen ist, wobei die Organe ein gesteuertes Drosselventil (8) in der ersten Verbindungsleitung (21) sowie mindestens zwei Durchflussmesser (81, 82) zur Steuerung des Drosselventils umfassen, wobei ein Durchflussmesser (81) in der ersten Verbindungsleitung (21) angeordnet ist.

Der Rückflussteiler für eine Kolonne mit parallel angeordneten Stoffaustausch-Partien, die durch eine vertikale Trennwand gegeneinander abgegrenzt sind, umfasst Organe zum gesteuerten Teilen einer zu behandelnden Flüssigkeit. Diese Organe sind mit einem Flüssigkeitssammler verbunden, der über der Trennwand innerhalb der Kolonne angeordnet ist. Die Organe einschliesslich Verbindungsleitungen für zwei Teilströme sind mit Vorteil ausserhalb der Kolonne angeordnet. Der Sammler umfasst einen Behälter, insbesondere einen Ringkanal, in dem die Menge der gesammelten Flüssigkeit zwischen einem minimalen und einem maximalen Pegel variieren kann. Unterhalb des minimalen Pegels sind eine erste Verbindungsleitung für den ersten Teilstrom und eine zweite Verbindungsleitung für den zweiten Teilstrom angeschlossen. Stromaufwärts vor der zweiten Verbindungsleitung ist im Behälter ein durch eine Wand abgegrenzter Teilraum angeordnet. In der Wand dieses Behälterteilraums ist mindestens ein Durchbruch für einen gedrosselten Flüssigkeitsdurchtritt zur Bildung des zweiten Teilstroms vorgesehen. Die Organe sind ein gesteuertes Drosselventil in der ersten Verbindungsleitung sowie Durchflussmesser zur Steuerung des Drosselventils.

Gegenüber dem oben beschriebenen, bekannten Rückflussteiler weist die Kolonne mit dem erfindungsgemässen Rückflussteiler zusätzlich den entscheidenden Vorteil auf, dass die beiden Teilströme nicht mittels einer intermittierenden Vorgehensweise gebildet werden und folglich kontinuierlich sowie mit weitgehend konstanten Stromstärken Verteilern zugeführt werden können. Bei der bereits bekannten Bildung der Teilströme haben die Verteiler eine puffernde Wirkung, die jedoch keine konstant bleibenden Stromstärken ermöglichen.

Zusätzlich benötigt der erfindungsgemässe Rückflussteiler nur handelsübliche Mess- und Steuergeräte und keine teuren Sonderanfertigungen.

Die abhängigen Ansprüche 2 bis 7 betreffen vorteilhafte Ausführungsformen der Kolonne mit dem erfindungsgemässen Rückflussteiler. Ein Verfahren zum Betreiben des Rückflussteilers ist Gegenstand der Ansprüche 8 bis 10.

Nachfolgend wird die Erfindung anhand der Zeichnungen erläutert. Es zeigen:

Fig. 1       einen Ausschnitt einer Trennwandkolonne,

Fig. 2a, 2b    zwei Varianten eines erfindungsgemässen Rückflussteilers,

Fig. 3       ein Detail zu einer Versuchsanordnung, die zur Durchführung von Messungen an einem erfindungsgemässen Rückflussteiler vorgesehen ist, und

Fig. 4       ein Diagramm mit Messresultaten.

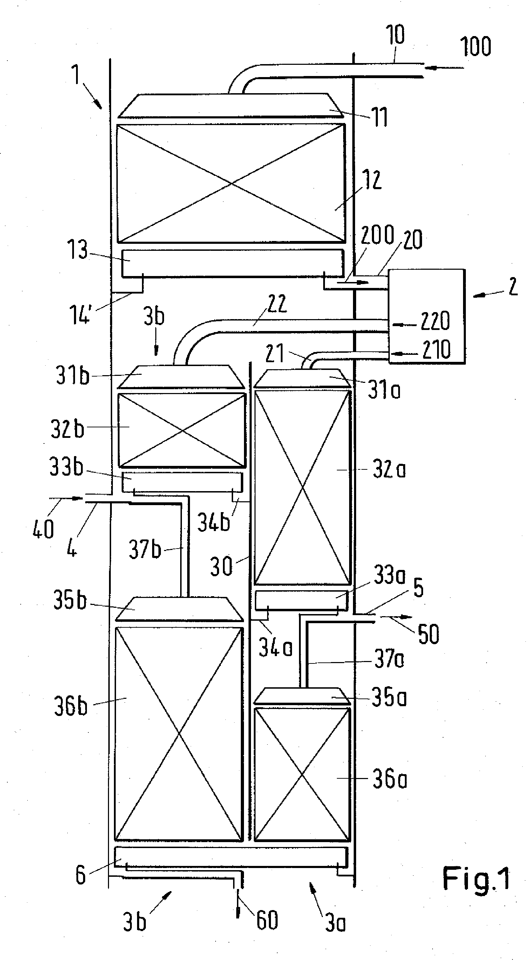

Eine Trennwandkolonne 1 mit einem Rückflussteiler 2 ist ausschnittsweise in Fig. 1 dargestellt. Die Trennwandkolonne 1 ist eine Kolonne mit zwei parallel angeordneten Stoffaustausch-Partien 3a und 3b, die durch eine vertikale Trennwand 30 gegeneinander abgegrenzt sind. Die Partie 3a umfasst einen oberen Verteiler 31a, eine obere Packung 32a, einen oberen Sammler 33a mit Ringkanal 34a, einen unteren Verteiler 35a und eine untere Packung 36a. Die Partie 3b umfasst entsprechend einen oberen Verteiler 31b, eine obere Packung 32b, einen oberen Sammler 33b mit Ringkanal 34b, einen unteren Verteiler 35b und eine untere Packung 36b. Die unteren Verteiler 35a und 35b sind über Leitungen 37a und 37b jeweils an die oberen Sammler 33a bzw. 33b angeschlossen. Ein für beide Partien 3a und 3b gemeinsamer Sammler 6 leitet Flüssigkeit 60 in einen unteren, nicht dargestellten Teil der Trennwandkolonne 1 weiter. Eine Einspeisestelle 4 für ein zu trennendes Flüssigkeitsgemisch 40 ist an den Ringkanal 34b angeschlossen. Das Gemisch 40 umfasst mindestens drei Komponenten. Aus dem Ringkanal 34a wird an der Abgabestelle 5 ein Produkt 50 des Trennverfahrens abgezogen.

Am Kopf der Kolonne 1 wird ein Rücklaufstrom 100 durch eine Leitung 10 und einen Verteiler 11 auf eine Packung 12 aufgebracht. Ein Sammler 13 mit einem Ringkanal 14' leitet die Flüssigkeit, die in den Stoffaustausch-Partien 3a und 3b zu behandeln ist, durch eine Leitung 20 in den Rückflussteiler 2, der ausserhalb der Kolonne 1 angeordnet ist. Diese zu behandelnde Flüssigkeit bildet den Eingangsstrom 200 des Rückflussteilers 2. Aus dem Stand der Technik - siehe Einleitung - ist ein solcher Rückflussteiler 2 bekannt. Organe des Rückflussteilers 2 (nicht dargestellt) erzeugen aus dem Eingangsstrom 200 gesteuert zwei Teilströme 210 und 220, die durch Leitungen 21 und 22 in die Partie 3a bzw. Partie 3b eingespeist werden.

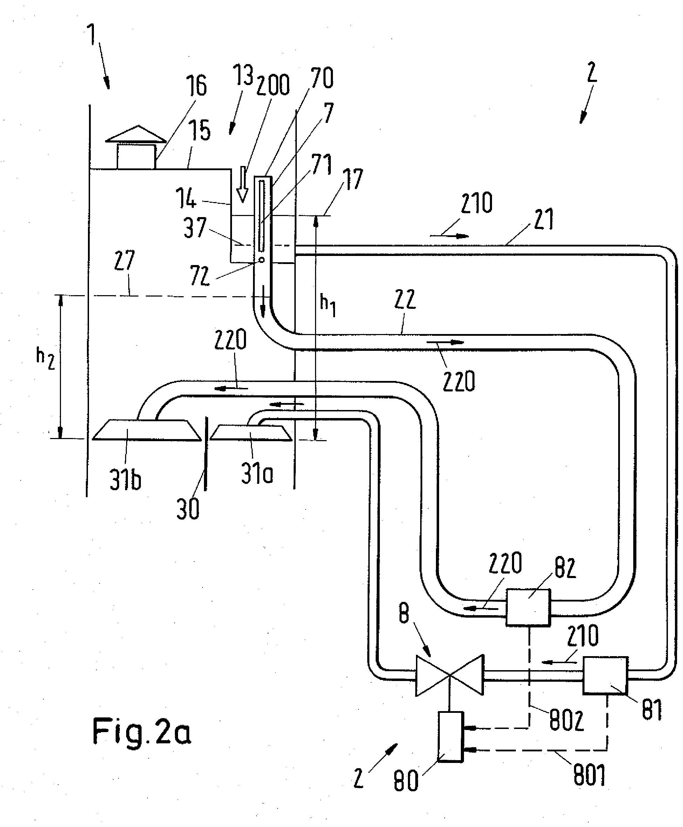

Eine Variante eines erfindungsgemässen Rückflussteilers 2 ist in Fig. 2a gezeigt. Der Sammler 13, aus dem der Eingangsstrom 200 mit der zu behandelnden Flüssigkeit entnommen wird, umfasst beim dargestellten Beispiel einen Boden 15, Kamine 16 für eine Weiterleitung von Dampf durch den Boden 15 und einen Behälter 14. Der Sammler 13 weist in der Regel einen anderen Aufbau auf, insbesondere kann der Behälter 14 als ein Ringkanal 14' (siehe Fig. 1) ausgebildet sein. Zwei Verbindungsleitungen 21 und 22 führen vom Behälter 14 zu den beiden Verteilern 31a bzw. 31b. Die Organe zum gesteuerten Teilen des Eingangsstroms 200 sind ein gesteuertes Drosselventil 8 sowie ein Durchflussmesser 81 in der ersten Verbindungsleitung 21 und ein Durchflussmesser 82 in der zweiten Verbindungsleitung 22. Signalübermittelnde Leitungen 801 und 802 zur Durchflussregelung verbinden die Durchflussmesser 81 bzw. 82 mit einem Regler 80 des Drosselventils 8.

Im Behälter 14 kann die Menge der gesammelten Flüssigkeit zwischen einem minimalen Pegel 37 (gestrichelt dargestellt) und einem maximalen Pegel (nicht dargestellt) variieren. Unterhalb des minimalen Pegels 37 ist die erste Verbindungsleitung 21 für den ersten Teilstrom 210 am Behälter 14 angeschlossen. In diesem Beispiel ist die zweite Verbindungsleitung 22 für den zweiten Teilstrom 220 an einem Boden des Behälters 14 angeschlossen. Stromaufwärts vor der zweiten Verbindungsleitung 22 ist im Behälter ein durch eine Wand 7 abgegrenzter Teilraum 70 angeordnet. In der Wand 7 dieses Behälterteilraums 70 sind ein oder mehrere Durchbrüche 71 für einen gedrosselten Flüssigkeitsdurchtritt zur Bildung des zweiten Teilstroms 220 vorgesehen.

Die Wand 7 des Teilraums 70 zur Bildung des zweiten Teilstroms 220 ist mit Vorteil ein vertikales Rohr, in dem loch- oder spaltförmige Durchbrüche 71 auf verschiedenen Höhen angeordnet sind. Der tiefstliegende Durchbruch 71 kann zumindest teilweise unter dem minimalen Pegel 37 liegen.

Der Teilraum 70 und die Verbindungsleitung 22 bilden zusammen eine Rückflussleitung zwischen einem Flüssigkeitsspeicher und einer darunter angeordneten Destillationseinrichtung, wobei diese Rückflussleitung ein Steigrohr im Speicher und eine Bogendichtung oder ein Siphon (u-förmiger Teil der Verbindungsleitung 22) umfasst. Eine derartige Rückflussleitung (reflux line) mit Steigrohr (standpipe) und Bogendichtung (loop seal) ist aus der EP-A- 0 621 799 bekannt. Allerdings ist diese bekannte Rückflussleitung nicht Teil eines Rückflussteilers.

Für die Erzeugung verschieden grosser Teilströme 210 und 220 weisen die Verbindungsleitungen 21 und 22, bei offenem Ventil 8, mit Vorteil verschieden grosse Strömungswiderstände auf. Die zweite Verbindungsleitung 22 ist für den grösseren Teilstrom vorgesehen. Folglich soll der Strömungswiderstand der zweiten Verbindungsleitung 22 kleiner als jener der ersten Verbindungsleitung 21 sein.

Ein Flüssigkeitsspiegel 17 im Behälter 14 liegt um einen Höhenunterschied, der Höhe $h_1$, über dem Ausgang des Verteilers 31b. Eine Flüssigkeitssäule der Höhe $h_1$ entspricht der Kraft, mit welcher der erste Teilstrom 210 im Maximum antreibbar ist. Ein Wert des Durchflusses in der ersten Verbindungsleitung 21 hängt ab von $h_1$, vom Strömungswiderstand und von der gesteuerten Einstellung des Ventils 8. In der zweiten Verbindungsleitung 22 füllt die Flüssigkeit die Leitung bis zu einem Niveau 27 auf einer Höhe $h_2$. Das Niveau 27 stellt sich aufgrund der durch die Durchbrüche 71 des Rohrs 7' gedrosselt nachströmenden Flüssigkeit in Abhängigkeit von der Lage des Flüssigkeitsspiegels 17 ein. Der Eingangsstrom 200 wird in zwei, in der Regel verschieden grosse Teilströme 210 und 220 mit einem vorgegebenen Verhältnis der Durchflussmengen geteilt. Es werden dazu in den Leitungen 21 und 22 die Durchflussmengen gemessen, bezüglich den Messwerten das Ventil 8 gesteuert und dabei gemäss einem Regelungsprogramm der kleinere der Teilströme, d.h. der Teilstrom 210, mit dem Ventil 8 eingestellt.

Der Höhenunterschied zwischen den extremalen Pegeln, d.h. zwischen dem maximalen Pegel und dem minimalen Pegel 37, soll möglichst klein sein (beispielsweise kleiner als 300 mm), jedoch ausreichend gross, so dass die Regelbarkeit gewährleistet ist. Der Eingangsstrom 200 wird innerhalb eines Arbeitsbereichs variiert. Das Verhältnis zwischen einem minimalen und einem maximalen Wert dieses Arbeitsbereichs beträgt beispielsweise mindestens 2. Damit der erforderliche Arbeitsbereich und der beschränkte Höhenunterschied zwischen den extremalen Pegeln im Behälter 14 realisierbar sind, muss die Anzahl der Durchbrüche 71 in der Wand 7 des Behälterteilraums 70 in der Regel grösser als 1 sein. Für die Durchbrüche 71 werden mit Vorteil gegen oben zunehmend grössere Durchtrittsflächen gewählt. Offensichtlich nehmen bei gleich grossen Durchbrüchen 71 die Durchflussraten gegen oben ab, da der Flüssigkeitsdruck am Eingang der Durchbrüche 71 gegen oben kleiner wird. (Dies gilt in ausgeprägter Weise, wenn das Niveau 27 in der Verbindungsleitung 22 unterhalb des minimalen Pegels liegt.) Mit der zunehmenden Grösse der Durchbrüche 71 kann man den abnehmenden Flüssigkeitsdruck teilweise kompensieren. Um bei einer Ausserbetriebnahme der Kolonne 1 den Behälter 14 entleeren zu können, ist zusätzlich zu den Durchbrüchen 71 eine Drainageöffnung 72 am Fuss des Behälterteilraums 70 vorgesehen, aus der sich ein nur sehr kleiner Beitrag zum zweiten Teilstrom 220 ergibt.

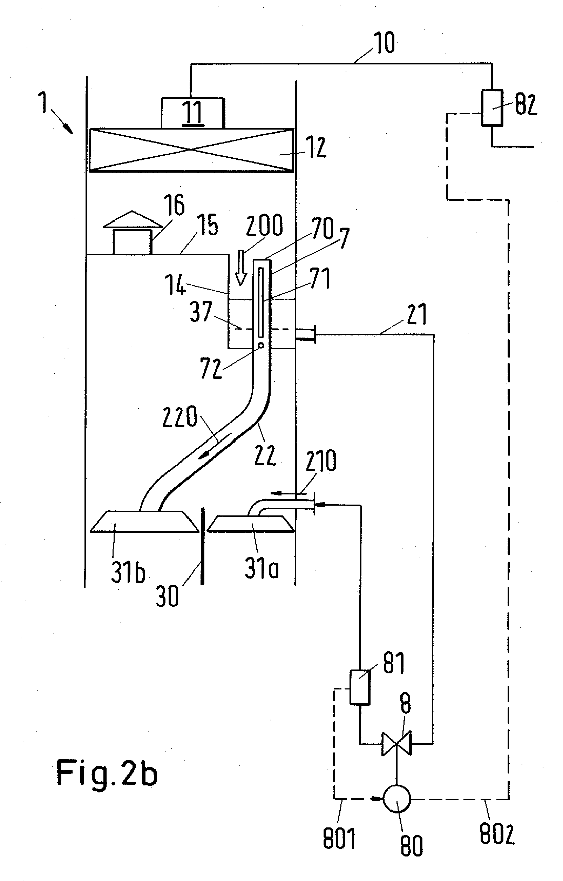

In Fig. 2b ist eine weitere Variante des erfindungsgemässen Rückflussteilers dargestellt. Der Unterschied zu der Variante in Fig. 2a besteht darin, dass der Teilstrom 220 in Rohr 22 nun innerhalb der Kolonne zum Verteiler 31b und somit zur Stoffaustausch-Partie 3b geführt wird. Dadurch vereinfacht sich einerseits die Rohrführung 22 und es werden zwei Wanddurchbrüche in der Wandung von Kolonne 1 eingespart, andererseits muss dann für eine Regelung des Ventils 8 der Durchfluss von Rücklaufstrom 100 in Leitung 10 mit Hilfe des Durchflussmessers 82 gemessen werden. Das Signal von Messgerät 82 wird über die Messleitung 802 wie in der vorherigen Variante auf den Regler 80 gelegt. Im Reglerprogramm wird dann zur Berechnung der Ventilstellung von Ventil 8 statt der Durchflussmenge von Teilstrom 220 die Differenz aus Rücklaufstrom 100 und Teilstrom 210 zuzüglich eines gewissen Korrekturterms verwendet, der die Änderung des Rücklaufstroms 100 und des Eingangsstroms 200 aufgrund von Flüssigkeitsbildung im Packungsteil 12 berücksichtigt.

Anstatt eines einzigen Rücklaufstroms 100 wäre hier auch eine andere Anordnung, zum Beispiel mit einem weiteren Strom, im oberen Teil von Kolonne 1, oberhalb der Trennwand 30, denkbar. Hierbei ist jedoch zu beachten, dass für eine geeignete Regelung der Teilströme 210 und 220 die Information über die Flüssigkeitsmenge im Eingangsstrom 200 vorhanden sein muss.

Es sind weitere Varianten möglich, beispielsweise: Statt einer Mehrzahl von Durchbrüchen 71 kann auch ein einzelner spaltförmiger Durchbruch vorgesehen sein. Das obere Ende des Teilraums 70 (Steigrohr) kann offen oder geschlossen sein. Der Teilraum 70 kann als ein relativ kurzes Überlaufrohr (ohne oder mit seitlichen Durchbrüchen) ausgebildet sein. Es können zusätzlich Pumpen in den Verbindungsleitungen 21 und 22 vorgesehen werden, um mit kleineren Höhen $h_1$ und $h_2$ (siehe Fig. 2) auskommen zu können.

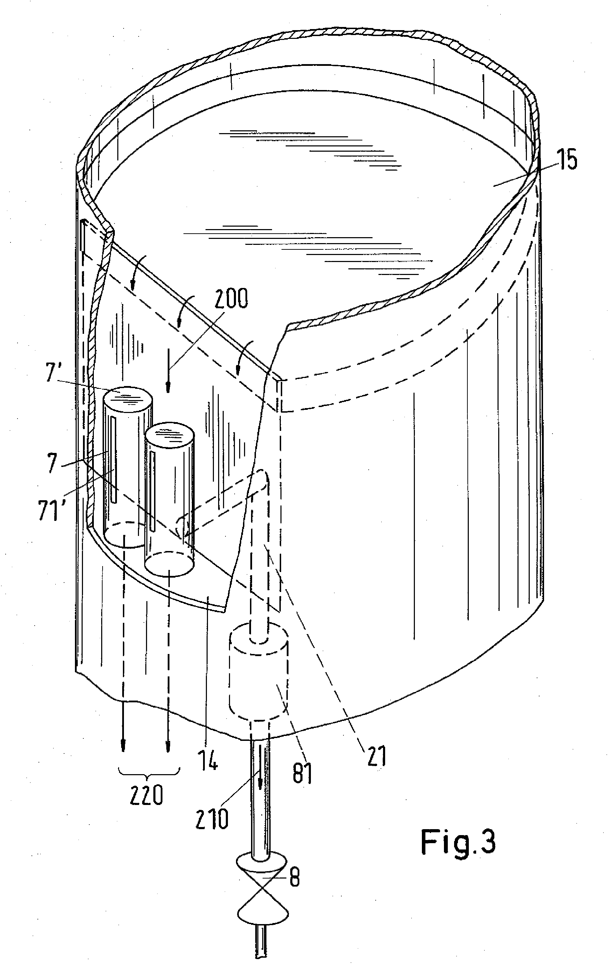

In Fig. 3 ist ausschnittsweise eine Versuchsanordnung zum erfindungsgemässen Rückflussteiler dargestellt, der ein Paar von Steigrohren (Teilraum 70, Rohr 7) enthält, die jeweils spaltförmige Durchbrüche 71' (mit vertikaler Länge: 200 mm; horizontaler Breite b: 8 mm) aufweisen. Die Rohre 7 sind oben mit einem Deckel 7' geschlossen. Der Eingangsstrom 200, der durch eine nicht dargestellte Umwälzpumpe gespiesen wird, fliesst vom Boden 15 über ein Überlaufwehr in den Behälter 14, in dem die Steigrohre angeordnet sind. Die Flüssigkeit staut sich im Behälter 14 bis zu einem Niveau auf, das um eine Höhe $h_0$ über dem tiefsten Punkt der spaltförmigen Durchbrüche 71' liegt. Der erste Teilstrom 210 fliesst durch die Leitung 21 und den Durchflussmesser 81, wobei die Menge des Teilstroms 210 über das Ventil 8 begrenzt wird. Der zweite Teilstrom 220 setzt sich aus den durch die Steigrohre abfliessenden Strömen zusammen. Die Durchflussmenge des Teilstroms 220 wird aus der Differenz zwischen dem mit Durchflussmesser 82 gemessenen Eingangsstrom 200 und dem Teilstrom 220 bestimmt.

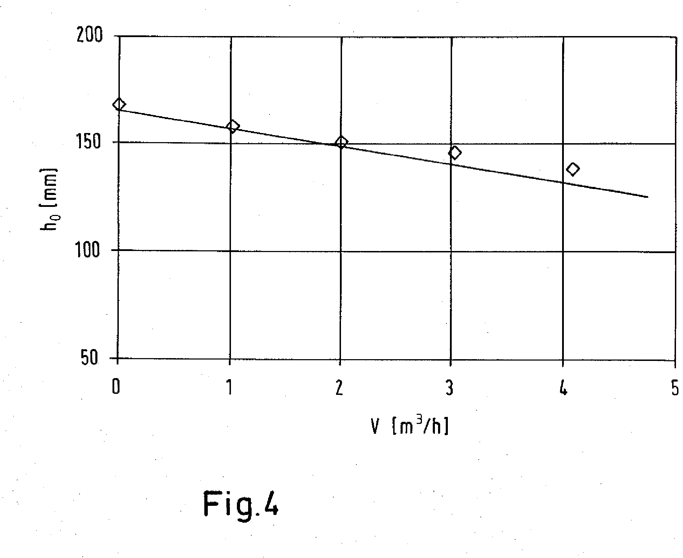

Ein Diagramm mit Messresultaten, die mit der Versuchsanordnung erhalten worden sind, ist in Fig. 4 gezeigt. Messpunkte (als Rauten angegeben) stellen die Höhe $h_0$ in Abhängigkeit von dem Volumenstrom V des ersten Teilstroms 210 dar (wobei der Eingangsstrom 200 für alle angegebenen Messpunkte gleich gross ist: 14 m³/h). Die Messpunkte liegen mit kleinen Abweichungen über einer Kurve, die mittels einer theoretisch abgeleiteten und auf empirischen Grundlagen beruhenden Beziehung berechnet worden ist. Diese Beziehung lautet (wobei g = Erdbeschleunigung und b' = vierfache Spaltbreite):

$$V = 14 - 0.41 \cdot b' \cdot h_0^{1.5} \cdot \sqrt{2g}$$

**Patentansprüche**

1. Kolonne (1) mit parallel angeordneten Stoffaustausch-Partien (3a, 3b), die durch eine vertikale Trennwand (30) gegeneinander abgegrenzt sind, welche einen Rückflussteiler (2) enthält, der Organe zum gesteuerten Teilen einer zu behandelnden Flüssigkeit aufweist, die mit einem Flüssigkeitssammler (13) verbunden sind, dieser Flüssigkeitssammler über der Trennwand innerhalb der Kolonne angeordnet ist, während die Organe ausserhalb der Kolonne angeordnet sind, und erste und zweite Verbindungsleitungen (21, 22) für einen ersten und einen zweiten Teilstrom (210, 220) umfassen, wobei die zwei Teilströme (210, 220) durch die erste und zweite Verbindungsleitungen (21, 22) in die Stoffaustausch-Partien (3a, 3b) eingespeist werden, **dadurch gekennzeichnet, dass** der Flüssigkeitssammler (13) einen Behälter (14) umfasst, insbesondere einen Ringkanal (14'), in dem die Menge der gesammelten Flüssigkeit zwischen einem minimalen und einem maximalen Pegel variieren kann, dass unterhalb dem minimalen Pegel (37) die erste Verbindungsleitung (21) für den ersten Teilstrom (210) am Behälter angeschlossen ist, dass die zweite Verbindungsleitung (22) für den zweiten Teilstrom (220) an den Behälter angeschlossen ist, dass stromaufwärts vor der zweiten Verbindungsleitung im Behälter ein durch eine Wand (7) abgegrenzter Behälterteilraum (70) angeordnet ist, dass in der Wand dieses Behälterteilraums (70) mindestens ein Durchbruch (71) für einen gedrosselten Flüssigkeitsdurchtritt zur Bildung des zweiten Teilstroms vorgesehen ist, wobei die Organe ein gesteuertes Drosselventil (8) in der ersten Verbindungsleitung (21) sowie mindestens zwei Durchflussmesser (81, 82) zur Steuerung des Drosselventils umfassen, wobei ein Durchflussmesser (81) in der ersten Verbindungsleitung (21) angeordnet ist.

2. Kolonne nach Anspruch 1, wobei die Organe das gesteuerte Drosselventil (8) sowie der Durchflussmesser (81) in der ersten Verbindungsleitung (21) und ein Durchflussmesser (82) in der zweiten Verbindungsleitung (22) sind.

3. Kolonne nach Anspruch 1, wobei am Kopf der Kolonne (1) eine Leitung (10) und ein Verteiler (11) auf einer Packung (12) aufgebracht sind, und, wobei die Organe das gesteuerte Drosselventil (8) sowie der Durchflussmesser (81) in der ersten Verbindungsleitung (21) und ein Durchflussmesser (82) in der Leitung (10) sind.

4. Kolonne nach einem der vorhergehenden Ansprüche, wobei die Wand (7) des Behälterteilraums (70) zur Bildung des zweiten Teilstroms (220) ein vertikales Rohr ist, in dem der Durchbruch (71) oder die Durchbrüche ein vertikaler Spalt ist bzw. lochförmige, auf verschiedenen Höhen angeordnete Durchbrüche sind.

5. Kolonne nach einem der vorhergehenden Ansprüche, wobei für die Erzeugung verschieden grosser Teilströme (210, 220) die zweite Verbindungsleitung (22) einen kleineren Strömungswiderstand aufweist als die erste Verbindungsleitung (21) und die zweite Verbindungsleitung für den grösseren Teilstrom vorgesehen ist.

6. Kolonne nach einem der vorhergehenden Ansprüche, wobei der Höhenunterschied zwischen dem maximalen Pegel und dem minimalen Pegel (37) kleiner als 300 mm ist, die Anzahl der Durchbrüche (71) in der Wand (7) des Behälterteilraums (70) mindestens 2 beträgt und zusätzlich zu diesen Durchbrüchen eine Drainageöffnung (72) am Fuss des Behälterteilraums vorgesehen sein kann.

7. Kolonne nach einem der vorhergehenden Ansprüche, **dadurch gekennzeichnet, dass** die Durchbrüche (71) in der Wand (7) des Behälterteilraums (70) gegen oben zunehmend grösser werden.

8. Kolonne (1) nach einem der vorhergehenden Ansprüche, wobei ein Sammler/Verteiler (33a, 35a) in der einen der Stoffaustausch-Partien (3a) eine Einspeisestelle (4) für ein zu trennendes, mindestens drei Komponenten umfassendes Flüssigkeitsgemisch (40) ist und ein weiterer Sammler/Verteiler (33b, 35b) in der anderen der beiden Stoffaustausch-Partien (3b) Abgabestelle (5) für ein Produkt (50) des Trennverfahrens ist.

9. Verfahren zum Betreiben einer Kolonne nach einem der Ansprüche 3 bis 8, **dadurch gekennzeichnet, dass** ein Eingangsstrom (200) in zwei, in der Regel verschieden grosse Teilströme (210, 220) mit einem vorgegebenen Verhältnis der Durchflussmengen geteilt wird, dass in den Leitungen (21, 22) für die Teilströme die Durchflussmengen gemessen werden, dass mit einer Regelung bezüglich den Messwerten ein Drosselventil (8) gesteuert wird und dass mit dem Drosselventil (8) der kleinere der Teilströme (210) gemäss einem Regelungsprogramm eingestellt wird.

10. Verfahren nach Anspruch 9, wobei die Durchflussmenge des grösseren Teilstromes (220) aus der Differenz zwischen dem gemessenen und mit dem Drosselventil (8) geregelten Teilstrom (210) und dem am Kolonnenkopf gemessenen Rücklaufstrom (100) errechnet wird.

11. Verfahren nach Ansprüchen 9 oder 10, wobei der Eingangsstrom (200) innerhalb eines Arbeitsbereichs variiert wird und das Verhältnis zwischen einem minimalen und einem maximalen Wert des Arbeitsbereichs mindestens 2 beträgt.

**Claims**

1. Column (1) with portions for the transfer of material (3a, 3b) arranged in parallel that are divided by a vertical partition (30), which comprises a reflux divider (2) comprising organs for separating a liquid to be treated in a controlled way, whereby said organs are connected to a liquid collector (13), which is disposed above the partition within the column, whereas the organs are arranged outside the column, and which comprise the first and the second connecting lines (21, 22) for a first and a second partial stream (210, 220), whereby the two partial streams (210, 220) are fed into the portions for the transfer of material (3a, 3b) through the first and the second connecting line (210, 220), **characterized in that** the liquid collector (13) comprises a container (14), in particular an annular channel (14'), in which the amount of the collected liquid may vary between a minimum and a maximum level, **in that** below the minimum level (37) the first connecting line (21) is connected to the container for the first partial stream (210), and that the second connecting line (22) is connected to the container for the second partial stream (220), **in that** upstream from the second connecting line a container compartment (70) is disposed in the container that is separated by a wall (7), **in that** in the wall of said container compartment (70) at least one orifice (71) is provided for a throttled passage of the liquid to produce a second partial flow, whereby the organs comprise a controlled throttle valve (8) in the first connecting line (21) as well as at least two flowmeters (81, 82) for controlling the throttle valve, whereby a flowmeter (81) is provided in the first connecting line (21).

2. Column according to claim 1, whereby said organs are the controlled throttle valve (8) as well as the flowmeter (81) in the first connecting line (21) and a flowmeter (82) in the second connecting line (22).

3. Column according to claim 1, whereby a line (10) and a divider (11) are provided on a package (12) at the head portion of the column (1), and whereby said organs are the controlled throttle valve (8) as well as the flowmeter (81) in the first connecting line (21) and a flowmeter (82) in the line (10).

4. Column according to any one of the preceding claims, whereby the wall (7) of the container compartment (70) for producing the second partial stream (220) is provided as vertical pipe, in which the orifice (71) or the orifices are provided as a vertical slot or, respectively, as hole-shaped orifices arranged at different heights.

5. Column according to any one of the preceding claims, whereby for the production of different partial streams (210, 220) the second connecting line (22) has a lower flow resistance than the first connecting line (21), and the second connecting line is provided for the larger flow resistance.

6. Column according to any one of the preceding claims, whereby the difference in level between the maximum level and the minimal level (37) is smaller than 300 mm, the number of orifices (71) in the wall (7) of the container compartment (70) is at least 2, and in addition to these orifices a drainage port (72) can be provided at the base of the container compartment.

7. Column according to any one of the preceding claims, **characterized in that** the orifices (71) in the wall (7) of the container compartment (70) become increasingly larger towards the top.

8. Column (1) according to any one of the preceding claims, whereby a collector/distributor (33a, 35a) is provided as feed-in point (4) for a liquid mixture (40) to be separated, which consists of at least three components in one of the portions for the transfer of material, and another collector/distributor (33b, 35b) is provided in the other portion for the transfer of material as discharge point (5) for a product (50) of the separation process.

9. Method of operating a column according to any one of the claims 3 to 8, **characterized in that** an input stream (200) is usually subdivided into partial streams (210, 220) of different sizes with a predetermined ratio of the flow rate, **in that** the flow rates are measured for the partial streams in the lines (21, 22), **in that** a throttle valve (8) is controlled by a control means relating to the measured values, and **in that** the smaller partial streams (210) are adjusted in accordance with a regulator program by means of a throttle valve (8).

**10.** Method according to claim 9, whereby the flow rate of the larger partial stream (220) is calculated from the difference between the measured partial stream (210) controlled with the throttle valve (8) and the recycle stream (100) measured at the column head.

**11.** Method according to claims 9 or 10, whereby the input stream (200) will be varied within an operational range and the ratio between a minimal and a maximal value of the operational range is at least 2.

## Revendications

**1.** Colonne (1) comportant des parties de transfert de matière (3a, 3b) agencées parallèlement, délimitées les unes par rapport aux autres par une cloison verticale (30) qui comprend un diviseur de reflux (2) présentant des organes destinés à la division contrôlée d'un liquide à traiter et reliés à un collecteur de liquide (13), ce collecteur de liquide étant agencé à l'intérieur de la colonne au-dessus de la cloison, tandis que les organes sont agencés à l'extérieur de la colonne, et comportant une première et une seconde conduites de liaison (21, 22) pour un premier et un second flux partiel (210, 220), les deux flux partiels (210, 220) étant amenés dans les parties de transfert de matière (3a, 3b) par les première et seconde conduites de liaison (21, 22),
**caractérisée en ce que**
le collecteur de liquide (13) comprend un récipient (14), en particulier un canal annulaire (14') dans lequel la quantité de liquide collecté peut varier entre un niveau minimal et un niveau maximal,
**en ce qu'**au-dessous du niveau minimal (37) la première conduite de liaison (21) pour le premier flux partiel (210) est raccordée au récipient,
**en ce que** la seconde conduite de liaison (22) pour le second flux partiel (220) est raccordée au récipient,
en amont de la seconde conduite de liaison, une chambre partielle (70) délimitée par une paroi (7) est agencée dans le récipient,
dans la paroi de cette chambre partielle (70) du récipient, il est prévu au moins une traversée (71) pour un passage de liquide étranglé en vue de former un second flux partiel,
les organes comprenant une vanne d'étranglement commandée (8) dans la première conduite de liaison (21) ainsi qu'au moins deux débitmètres (81, 82) pour commander la vanne d'étranglement, un débitmètre (81) étant agencé dans la première conduite de liaison (21).

**2.** Colonne selon la revendication 1,
dans laquelle
lesdits organes sont la vanne d'étranglement commandée (8) ainsi que le débitmètre (81) dans la première conduite de liaison (21) et un débitmètre (82) dans la seconde conduite de liaison (22).

**3.** Colonne selon la revendication 1,
dans laquelle
à la tête de la colonne (1), une conduite (10) et un distributeur (11) sont montés sur une garniture (12), et lesdits organes sont la vanne d'étranglement commandée (8) ainsi que le débitmètre (81) dans la première conduite de liaison (21) et un débitmètre (82) dans la conduite (10).

**4.** Colonne selon l'une des revendications précédentes,
dans laquelle
la paroi (7) de la chambre partielle (70) du récipient est un tube vertical pour former le second flux partiel (220), dans lequel la traversée (71) ou les traversées sont une fente verticale ou des traversées en forme de trous disposés à des hauteurs différentes.

**5.** Colonne selon l'une des revendications précédentes,
dans laquelle
en vue de produire des flux partiels (210, 220) de différentes tailles, la seconde conduite de liaison (22) présente une résistance à l'écoulement plus petite que celle de la première conduite de liaison (21), et la seconde conduite de liaison est prévue pour le flux partiel plus grand.

**6.** Colonne selon l'une des revendications précédentes,
dans laquelle
la différence en hauteur entre le niveau maximal et le niveau minimal (37) est inférieure à 300 mm, le nombre des traversées (71) dans la paroi (7) de la chambre partielle (70) du récipient est au moins de 2, et en supplément à ces traversées, il est prévu une ouverture de drainage (72) au pied de la chambre partielle du récipient.

**7.** Colonne selon l'une des revendications précédentes,
**caractérisée en ce que**
les traversées (71) dans la paroi (7) de la chambre partielle (70) du récipient deviennent de plus en plus grandes vers le haut.

**8.** Colonne (1) selon l'une des revendications précédentes,
dans laquelle
un collecteur/distributeur (33a, 35a) dans l'une des parties de transfert de matière (3a) est un emplacement d'entrée (4) pour un mélange liquide (40) à séparer comprenant au moins trois composantes, et un autre collecteur/distributeur (33b, 35b) dans l'autre des deux parties de transfert de matière (3b) est un emplacement de sortie (5) pour un produit (50) du procédé de séparation.

9.  Procédé pour faire fonctionner une colonne selon l'une des revendications 3 à 8,
    **caractérisé en ce que**
    on divise un flux d'entrée (200) en deux flux partiels (210, 220) ayant en règle générale des tailles différentes, avec un rapport donné des débits,
    **en ce que** dans les conduites (21, 22) on mesure les débits pour les flux parties,
    **en ce qu'**on commande une vanne d'étranglement (8) au moyen d'une régulation par rapport aux valeurs mesurées,
    et **en ce que** l'on règle le petit flux des flux parties (210) selon un programme de régulation au moyen de la vanne d'étranglement (8).

10. Procédé selon la revendication 9,
    dans lequel
    on calcule le débit du grand flux partiel (220) à partir de la différence entre le courant partiel (210) mesuré et régulé par la vanne d'étranglement (8) et le flux de retour (100) mesuré à la tête de la colonne.

11. Procédé selon les revendications 9 ou 10,
    dans lequel
    le flux d'entrée (200) varie au sein d'une plage de travail, et le rapport entre une valeur minimale et une valeur maximale de la plage de travail est au moins de 2.

Fig.1

Fig.2a

Fig.2b

Fig.3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004071618 A1
- US 20040182751 A1
- EP 0621799 A